(19) Europäisches Patentamt / European Patent Office / Office européen des brevets

(11) **EP 3 954 209 A1**

(12) **EUROPEAN PATENT APPLICATION**

(43) Date of publication:
**16.02.2022 Bulletin 2022/07**

(21) Application number: **20190391.1**

(22) Date of filing: **11.08.2020**

(51) International Patent Classification (IPC):
*A01N 25/10* (2006.01)   *A01N 43/16* (2006.01)
*A01N 63/00* (2020.01)   *C12N 1/00* (2006.01)
*A01N 65/20* (2009.01)

(52) Cooperative Patent Classification (CPC):
(C-Sets available)
**A01N 63/00; A01N 25/10; A01N 43/16;**
**A01N 65/20; A01P 3/00;** A01N 2300/00   (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Rhodia Operations
93300 Aubervilliers (FR)**

(72) Inventor: **The designation of the inventor has not
yet been filed**

(74) Representative: **Cardon, Flavie
Rhodia Operations
Intellectual Assets Management
52, rue de la Haie-Coq
93306 Aubervilliers Cedex (FR)**

(54) **METHOD FOR IMPROVING THE RAINFASTNESS OF BENEFICIAL MICROORGANISMS**

(57)    The present invention relates to a composition comprising at least one beneficial microorganism and at least one guar gum.

It relates more especially to the use of at least one guar gum as a rainfastness agent in a composition comprising at least one beneficial microorganism.

EP 3 954 209 A1

(52) Cooperative Patent Classification (CPC): (Cont.)

C-Sets
**A01N 43/16, A01N 25/10, A01N 63/00;**
**A01N 43/16, A01N 63/00;**
**A01N 43/16, A01N 63/00, A01N 2300/00;**
**A01N 65/20, A01N 25/10, A01N 63/00;**
**A01N 65/20, A01N 63/00;**
**A01N 65/20, A01N 63/00, A01N 2300/00**

**Description**

The present invention relates to a composition comprising at least one beneficial microorganism and at least one guar gum. It relates more especially to the use of at least one guar gum as a rainfastness agent in a composition comprising at least one beneficial microorganism.

In recent years, both environmental and human health concerns have fostered interest in promoting alternatives to synthetic pesticides.

Biocontrol has been considered among the most promising alternatives for sustainable agriculture, but its global rate of adoption remains low versus conventional pesticides for several reasons, including lack of biological efficacy in adverse conditions.

One of the major problems with pesticidal treatments is that pesticides are generally prone to leaching from treated agricultural targets (including plant parts and soil). When applied on plant parts, such as leafs, they may for instance suffer run-off or loss caused by rapid watering, rain or other water exposures. As another example, pre-emergent agents (i.e., those agents that are applied to the soil before the germination of plants or weeds) need to stay where they are applied for a period of time while the plants and/or weeds are germinating. Dissipation of a pre-emergent agent by run-off by water exposure and the like, is obviously undesirable during the germination period.

These problems are especially important when using beneficial microorganisms, which generally need to act over a prolonged period of time to obtain their desired effect. This is because beneficial microorganisms are often longer-acting compared to conventional synthetic agrochemical products, especially conventional synthetic pesticides, as their effect is based on a viable and reproducible microorganism.

Normally microorganisms must remain active for a time after application, and ideally throughout the period that a pest is likely to attack the crop, or in soil throughout the crop cycle.

They are however often lost physically from the target location because of the action of adverse conditions such as wind, rain or leaching.

This is the reason why there remains a need for compositions comprising at least one beneficial microorganism and exhibiting improved retention properties, especially improved rainfastness, of said beneficial microorganism on an agricultural target.

There remain also a need for new rainfastness agents that would not only improve retention properties, especially rainfastness, of a beneficial microorganism on an agricultural target, but also maintain or even improve the biological efficacy of said beneficial microorganism.

For instance, in case of a biopesticide, there remain a need for new rainfastness agents that would not only improve retention properties, especially rainfastness, of the biopesticide on an agricultural target, but also maintain or even improve the biopesticide efficacy of said biopesticide against the target pathogens.

There remains also a need for new rainfastness agents that have favorable toxicological and/or ecological profile and desirable characteristics in terms especially of biodegradability, low toxicity and/or low hazard level.

It has been found, unexpectedly, that improved retention properties of beneficial microorganisms on agricultural targets, and especially improved rainfastness, could be achieved by using one guar gum as described hereunder.

In one embodiment, the present invention relates to a method for improving rainfastness of at least one beneficial microorganism on an agricultural target comprising the step of combining said beneficial microorganism with at least one guar gum on said agricultural target.

In one embodiment, the present invention also relates to a method for improving rainfastness of at least one beneficial microorganism on an agricultural target, with said method comprising the step of applying together at least said beneficial microorganism and at least one guar gum, to said agricultural target.

According to one embodiment, the present invention relates especially to a method for improving rainfastness of at least one beneficial microorganism-containing solution sprayed on an agricultural target, with said method comprising at least the following steps:

- providing a guar gum of the invention,
- combining said guar gum with at least one beneficial microorganism to obtain the solution and
- spraying the resulting solution on the agricultural target.

Alternatively the present invention also relates to a method for improving rainfastness of at least one beneficial microorganism-containing solution sprayed on an agricultural target, with said method comprising at least the following steps:

- spraying a solution containing a guar gum of the invention on the agricultural target, and simultaneously or successively,
- spraying a solution containing one beneficial microorganism on the agricultural target.

In one embodiment, the present invention also relates to an agricultural composition comprising at least one guar gum and at least one beneficial microorganism, with said guar gum being present in a sufficient amount to improve rainfastness of said beneficial microorganism on an agricultural target.

In one embodiment, the present invention also relates to a method of treating a plant infection by applying together at least one beneficial microorganism, especially one biopesticide, and at least one guar gum as described above to an agricultural target in need thereof. Such methods of treating comprise preventing the infection.

In one embodiment, the present invention also relates to an agricultural formulation comprising at least guar gum as described hereunder, where said formulation can form a coating on an agricultural target.

According to one embodiment, said coating may be water-resistant, resistant to friction, and/or rainfast.

According to one embodiment, said coating may advantageously retain the beneficial microorganism on the agricultural target when subject to an adverse condition, where the adverse condition can be a condition such as rainfall or other water exposure, friction, wind, and secondary agricultural treatment.

It has also been found, unexpectedly, that when using one guar gum of the invention as rainfastness agent, the biological efficacy (commonly referred to as "bioefficacy") of the beneficial microorganism combined to said guar gum may be increased, especially after exposure to water.

In one embodiment, the present invention also relates to a method to increase bioefficacy of a beneficial microorganism comprising the step of (i) combining said beneficial microorganism with at least an effective amount of one guar gum and subsequently (ii) submitting said beneficial microorganism to exposure to water.

In another embodiment, the present invention also relates to a method to increase bioefficacy of a beneficial microorganism comprising the step of (i) applying together said beneficial microorganism with at least an effective amount of one guar gum and subsequently (ii) submitting said beneficial microorganism to exposure to water.

According to the present invention, the expression "increase bioefficacy of a beneficial microorganism" refers to increased microbial activity of said beneficial microorganism.

Advantageously, especially when the bioefficacy of the beneficial microorganism is increased in presence of the rainfastness agent of the present invention, a reduced total amount of beneficial microorganism may be used in the treatment formulation and/or reduced application rates on the agricultural target may be used.

Advantageously, the guar gum of the invention may also impart improved humectancy in the formulation containing it.

This is particularly advantageous as some beneficial microorganisms of the invention may have certain moisture needs for activity. For instance, antagonistic bacteria used against plant pathogens need the plant surface to be wet in order to establish themselves. Other examples include fungal spores that may need high humidity to germinate.

Advantageously, the guar gum of the invention is generally recognized as safe, which is particularly advantageous for use especially on fruits or vegetables with edible skins

In one embodiment, the guar gum of the invention may be organically produced.

In one embodiment, the guar gum of the invention may not fall under the regulations set out by the European Chemical Agency (ECHA) regarding restricted use of oxo-plastics and intentionally added microplastic particles.

Various other objects and advantages of the present invention will become evident from the following brief description of drawings and from the detailed description of the invention.

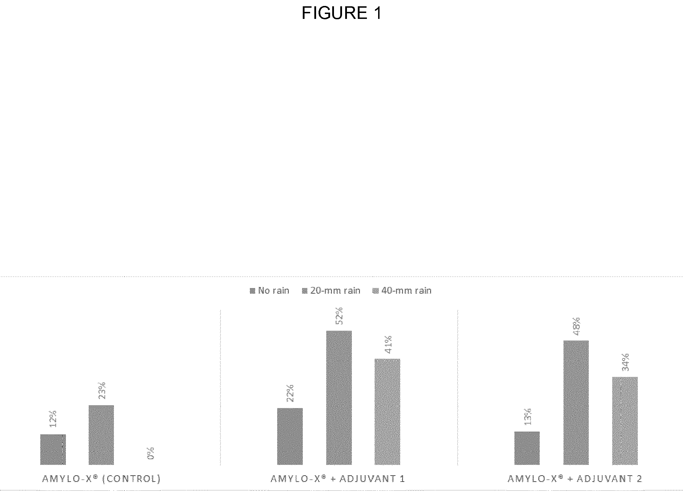

**FIGURE 1** is a graph showing the adjuvant effect on Amylo-X® efficacy without and with different rain washing amount (20-mm & 40-mm), on a control composition without adjuvant (left), a composition of the invention containing adjuvant 1 (middle) and a comparative composition containing adjuvant 2 (right).


**GUAR GUM**

In the present application, guar designates the plant Cyanopsis tetragonoloba. Cyamopsis tetragonoloba (guar) gums as defined below.

In the present application, "guar seeds" designates seeds derived from guar. Guar seeds comprise the hull, which is more or less fibrous, the germ, and two "guar splits" or "endosperm halves", which constitute the endosperm of guar. The splits (or endosperm) is/are rich in galactomannans. The guar seeds generally consist of 35 to 40% by weight of endosperm, 42 to 47% by weight of germ, and 14 to 17% by weight of hull.

In the present application, "guar flour" or "guar powder" designates a powder derived from the guar endosperm.

In the present application, "native guar" designates macromolecular chains of the galactomannan type, derived from guar endosperm, not having been subjected to chemical modification by the grafting of chemical groups. Native guar comprises macromolecules containing a principal chain of D-mannopyranose units linked in the beta (1-4) position substituted by D-galactopyranose units in the beta (1-6) position. Native guar has a mannose/galactose ratio of about 2.

In the present application, "Cyamopsis tetragonoloba (guar) gum guar" (also referred to as "guar gum") designates a product substantially consisting of native guar, in the form of guar splits, or of guar flour or powder.

As used herein, the "average molecular weight" of the guar gum means the weight average molecular weight of said guar gum.

According to anyone of the invention embodiments, the guar gum of the invention may have an average molecular weight (Mw) of between 2,000 Daltons and 5,000,000 Daltons. In one embodiment, the guar gum of the invention may have an average molecular weight (Mw) of between 100,000 Daltons and 4,500,000 Daltons, for instance between 500,000 Daltons and 4,000,000 Daltons, for instance between 1,000,000 Daltons and 3,500,000 Daltons, for instance between 2,000,000 and 3,500,000 Daltons.

In another embodiment, the guar gum of the invention may have an average molecular weight (Mw) of between about 100,000 Daltons and 2,000,000 Daltons, for instance between about 300,000 Daltons and 1,800,000 Daltons, for instance between about 350,000 Daltons and 1,700,000 Daltons, for instance between about 400,000 Daltons and 1,500,000 Daltons.

The average molecular weight of the guar gum may be measured by GPC (Gel Permeation Chromatography). Measurements may be carried out for instance using Shodex OH Pak columns and Agilent Refractive Index Detector.

The guar gum of the invention may be crosslinked or not.

According to anyone of the invention embodiment, the guar gum of the invention is not crosslinked.

According to anyone of the invention embodiment, the guar gum of the invention may be crosslinked. It may be for instance treated with a crosslinking agent. Borax (sodium tetra borate) for instance is commonly used as a processing aid in the reaction step of the water-guar splits process to partially crosslink the surface of the guar splits and thereby reduces the amount of water absorbed by the guar splits during processing. Other crosslinkers, such as, for example, glyoxal or metals like titanium, zirconium or aluminium, are also widely used.

The composition containing Cyamopsis tetragonoloba (guar) gum guar may be a solid or a liquid composition.

According to anyone of the invention embodiment, the composition containing Cyamopsis tetragonoloba (guar) gum guar may be a solid composition.

In the case wherein the composition is solid, the composition may be in the form of a powder, a particle, an agglomerate, a flake, a granule, a pellet, a tablet, a brick, a paste, a block such as a molded block, a unit dose, or another solid form known to those of skill in the art. In particular, the solid composition may be in the form of a powder or a granule.

According to anyone of the invention embodiment, the composition containing Cyamopsis tetragonoloba (guar) gum guar may be a liquid composition.

In the case that the composition is liquid, the liquid composition may be a suspension, a dispersion, a slurry, a solution in a liquid carrier selected from water, organic solvents oils or a mixture thereof. The liquid composition may be prepared by mixing Cyamopsis tetragonoloba (guar) gums as described above with the liquid carrier, optionally with other components, by using conventional methods.

In one embodiment, the liquid composition is in the form of an aqueous solution.

More particularly, the liquid composition of the invention may comprise the guar gum in the form of an incompletely hydrated water soluble polymer suspended in a aqueous liquid medium, with said composition preferably further containing a suspending agent in an amount effective to impart shear thinning properties and yield strength to the composition, and optionally an hydration inhibitor.

In another embodiment, the liquid composition is in the form of a dispersion in a compound which is not a solvent of the guar gum, in particular it is in the form of an oil dispersion.

More particularly, the compound which is not a solvent of the guar gum may be selected from oils of animal or vegetable origin, or from esters of fatty acids, or from hydrocarbonated oils. The oils of animal origin that may be mentioned include, amongst others, sperm whale, dolphin, whale, seal, sardine, herring, dogfish, and cod liver oil. As examples of oils of vegetable origin, the following, amongst others, may be mentioned: rape-seed, sunflower, groundnut, olive, walnut, maize, soya, linseed, hemp, grapeseed, copra, palm, cotton-seed, babassu, jojoba, sesame, castor and coriander oil. It is also possible to utilize saturated or non-saturated fatty acid esters, comprising, for the acid part, 6 to 40 carbon atoms, optionally carrying one or more hydroxylated groups. Examples of fatty acids that can be mentioned in particular include oleic, myristoleic, palmitoleic, petroselenic, erucic, linoleic, linolenic and ricinoleic acid. The methyl, ethyl and propyl esters of these acids are particularly suitable. More particularly, mention may be made of the products of alcoholysis, or to be more precise, methanolysis of the oils. It is also possible to utilize aliphatic hydrocarbonated paraffin-type or aromatic oils (petroleum fractions etc.).

A liquid composition of the invention may for instance comprise a fatty acid (C1-C3)alkyl ester component, comprising one or more of methyl, ethyl, or propyl hexanoate, methyl, ethyl, or propyl heptanoate, methyl, ethyl, or propyl octanoate, methyl, ethyl, or propyl nonanoate, methyl, ethyl, or propyl decanoate, methyl, ethyl, or propyl undecanoate, methyl, ethyl, or propyl dodecanoate, methyl, ethyl, or propyl tridecanoate, methyl, ethyl, or propyl tetradecanoate, methyl, ethyl, or propyl pentadecanoate, methyl, ethyl, or propyl hexadecanoate, methyl, ethyl, or propyl heptadecanoate, methyl, ethyl, or propyl octadecanoate, methyl, ethyl, or propyl nonadecanoate, methyl, ethyl, or propyl eicosanoate, methyl, ethyl, or propyl docosanoate, methyl, ethyl, or propyl tricosanoate, methyl, ethyl, or propyl tetracosanoate, methyl, ethyl, or propyl cis-9- hexadecenoate, methyl, ethyl, or propyl all cis-7,10,13-hexadecatrienoate methyl, ethyl, or propyl cis-6-octadecenoate, methyl, ethyl, or propyl trans-6-octadecenoate, methyl, ethyl, or propyl cis-7-octadecenoate, methyl, ethyl, or propyl cis-9-octadecenoate, methyl, ethyl, or propyl frans-9-octadecenoate, methyl, ethyl, or propyl cis-1 1 -octadecenoate, methyl, ethyl, or propyl trans- - octadecenoate, methyl, ethyl, or propyl cis-12-octadecenoate, methyl, ethyl, or propyl cis, cis-9, 12-octadecedienoate, methyl, ethyl, or propyl frans-9,12-octadecedienoate, methyl, ethyl, or propyl all cis-6,9,12-octadecatrienoate, methyl, ethyl, or propyl ester all cis-9,12,15-octadecatrienoate, methyl, ethyl, or propyl all cis-6,9,12,15,-octadecatetraenoate, methyl, ethyl, or propyl cis-1 1 - eicosenoate, methyl, ethyl, or propyl cis, cis-1 1 ,14-eicosadienoate, methyl, ethyl, or propyl all cis-1 1 ,14,17-eicosatrienoate, methyl, ethyl, or propyl all cis-5,8,1 1 ,14-eicosatetraenoate, methyl, ethyl, or propyl all cis-8,1 1 ,14,17-eicosatetraenoate, methyl, ethyl, or propyl all cis-5,8,1 1 ,14,17-eicosapentaenoate, methyl, ethyl, or propyl cis-13-docosenoate, methyl, ethyl, or propyl cis, cis-13,16-docosadienoate, methyl, ethyl, or propyl all cis-6,9,12-octadecatrienoate, methyl, ethyl, or propyl all cis-7,10, 13,16-docosatetraenoate, methyl, ethyl, or propyl all cis-7,10,13,16,19-docosapentaenoate, methyl, ethyl, or propyl all cis-4,7,10,13,16,19-docosahexaenoate, methyl, ethyl, or propyl cis-15- tetracosenoate methyl, ethyl, or propyl all cis-9, 12,15,18,21 - tetracosapentaenoate, methyl, ethyl, or propyl all cis-6,9,12,15,18,21 - tetracosahexaenoate, including mixtures two or more of any of such fatty acid (C1-C3)alkyl esters. More typically, the fatty acid (C1-C3)alkyl ester component of the composition of the present invention comprises a mixture of two or more of such fatty acid (C1-C3)alkyl esters, in the form of one or more (C1-C3)alkyl esters of one or more vegetable oils, more typically, a methylated vegetable oil, even more typically, methylated soybean oil or methylated rapeseed oil.

## BENEFICIAL MICROORGANISM

As mentioned previously, the present invention relates to the use of guar gum as a rainfastness agent for beneficial microorganisms.

As used herein, the term "beneficial microorganism" means any microorganism, whether in a vegetative state, a dormant state (e.g., spore) or a whole broth culture, any substance derived from a microorganism (e.g., metabolites), or any fermentation product (e.g., supernatants, filtrates, extracts, etc.) that are beneficial to a plant.

According to the invention, the term "beneficial microorganisms" is intended to include (i) biopesticides, (ii) microorganisms that improve plant nutrition and (iii) microorganisms that induce the defense response in plants.

In one embodiment, the beneficial microorganism may especially be a biopesticide.

As used herein, the term "pesticidal" means any agent or combination of agents that is pathogenic to at least one target pest (e.g., a nematode, an insect, an acari, a fungal pest, a bacterial pest, a viral pest, etc.).

As used herein, the term "biopesticide" (which is equivalent to "microbial pesticide"), means any microorganism, whether in a vegetative state, a dormant state (e.g., spore) or a whole broth culture, any substance derived from a microorganism (e.g., metabolites), or any fermentation product (e.g., supernatants, filtrates, extracts, etc.) that are pathogenic to a pest (e.g., capable of attacking, infecting, killing, disabling, causing disease, compete with and/or causing injury to a pest), and is thus able to be used in the control of a pest by adversely affecting the viability or growth of the target pest. Non-limiting examples of "microbial pesticides" include microbial nematocides, microbial insecticides, microbial fungicides, microbial bactericides, and microbial viricides).

As used herein, "derived from" means directly isolated or obtained from a particular source or alternatively having identifying characteristics of a substance or organism isolated or obtained from a particular source. In the event that the "source" is an organism, "derived from" means that it may be isolated or obtained from the organism itself or medium used to culture or grow said organism.

As used herein, "whole broth culture" refers to a liquid culture containing both cells and media. If bacteria are grown on a plate the cells can be harvested in water or other liquid, whole culture.

As used herein, the term "supernatant" refers to the liquid remaining when cells grown in broth or are harvested in another liquid from an agar plate and are removed by centrifugation, filtration, sedimentation, or other means well known in the art.

As defined herein, "filtrate" refers to liquid from a whole broth culture that has passed through a membrane.

As defined herein, "extract" refers to liquid substance removed from cells by a solvent (water, detergent, buffer) and separated from the cells by centrifugation, filtration or other method.

As used herein, "metabolite" refers to a compound, substance or byproduct of a fermentation of a microorganism, or supernatant, filtrate, or extract obtained from a beneficial microorganism, for instance from a microorganism that has pesticidal and particularly, insecticidal activity. As defined herein, an "isolated compound" is essentially free of other compounds or substances, e.g., at least about 20% pure, preferably at least about 40% pure, more preferably about 60% pure, even more preferably about 80% pure, most preferably about 90% pure, and even most preferably about 95% pure, as determined by analytical methods, including but not limited to chromatographic methods, electrophoretic methods.

As used herein, the terms "spore", "microbial spore", etc., has its normal meaning which is well known and understood by those of skill in the art (i.e., a microorganism in its dormant, protected state).

As used herein, the term "herbicide(s)" is intended to refer to any agent or combination of agents capable of killing weeds and/or inhibiting the growth of weeds (the inhibition being reversible under certain conditions).

As used herein, the term "fungicide(s)" is intended to refer to any agent or combination of agents capable of killing fungi and/or inhibiting fungal growth.

As used herein, the term "nematicide" or "nematicidal" is intended to refer to any agent or combination of agents capable of killing one or more nematodes and/or inhibiting the growth of one or more nematodes.

As used herein, the term "insecticide" or "insecticidal" is intended to refer to any agent or combination of agents capable of killing one or more insects and/or inhibiting the growth of one or more insects. As used herein, the term "acaricide" or "acaricidal" is intended to refer to any agent or combination of agents capable of killing one or more acarids and/or inhibiting the growth of one or more acarids.

According to anyone of the invention embodiment, the beneficial microorganism of the invention may be a biopesticide chosen from fungal spores or bacterial spores.

Examples of fungal spores or conidia that are insecticidal or nematicidal or fungicidal include but not limited to the following classes: Basidiomycetes, Chytridiomycetes, Deuteromycetes, Hyphochytridiomycetes, Oomycetes, Plasmodiophoromycetes, Sordahomycetes, Thchomycetes and Zygomycetes, specifically the following fungi; Arthrobotrys superba, Arthrobotrys irregular, Beauveria bassiana, Erynia neoaphidis, Fusarium spp., Hirsute/ la rhossiliensis, Hirsutella thompsonii, Lagenidium giganteum, Metarhiziurn anisopliae, Myrothecium, Neozygietes fresenii (Nowakowski), Nomuraea rileyi, Paecilomyces lilacinus, Pseudomonas chloroaphis, Pseudomonas spp., Psedozyma Flocculosa, Trichoderma harzianum, and Vericillium lecanii., Verticillium lecanii, plus those endoparasitic fungi described in the book of "Nematology Advances and Perspectives, Vol. 2 (2004)", which is incorporated herein by reference in its relevant portion. Also included is a fungus genus "Esteya vermicola as described in US Patent No 6,168,947 (incorporated by reference), as well as the "Arkansas Fungus 18' as described in US Patent No 5,019,389 (incorporated herein by reference).

Examples of bacterial spores include but not limited to Bacillus agri, Bacillus aizawai, Bacillus albolactis, Bacillus amyloliquefaciens, Bacillus cereus, Bacillus circulans, Bacillus coagulans, Bacillus endoparasiticus, Bacillus endorhythmos, Bacillus firmus, Bacillus kurstaki, Bacillus lacticola, Bacillus lactimorbus, Bacillus lactis, Bacillus laterosporus, Bacillus lentimorbus, Bacillus licheniformis, Bacillus macerans, Bacillus megatehum, Bacillus medusa, Bacillus metiens, Bacillus natto, Bacillus nigricans, Bacillus popillae, Bacillus pumiliss, Bacillus pumilus, Bacillus siamensis, Bacillus sphaehcus, Bacillus spp., Bacillus subtilis, Bacillus thuringiensis, Bacillus uniflagellatus, plus those listed in the category of Bacillus Genus in the "Todar's Online Textbook of Bacteriology, (2009)" which is incorporated herein by reference in its relevant portion. Also included are Photorhabdus luminescens, Xenorhabdus nematophilus, pantoea agglomerans, and those nematicidal bacterial antagonists listed in "Nematology Advances and Perspectives, Vol. 2 (2004)."

Advantageously, the use of guar gum according to the present invention is also suitable to improve rainfastness of conventional pesticides, such as for instance sulfur.

According to anyone of the invention embodiments, the present invention relates to the use of guar gum as a rainfastness agent for conventional pesticides, in particular for sulfur.

## AGRICULTURAL TARGETS

As mentioned previously, the agricultural formulations and methods disclosed herein can be used for retaining beneficial microorganisms on agricultural targets.

The present invention provides the use of guar gum for improved rainfastness of beneficial microorganisms on agricultural targets.

According to the invention the term "agricultural target" is intended to cover plant parts and soil.

In one exemplary embodiment, the agricultural target is a plant part.

As used herein, the term "plant part" is to be understood as meaning all parts and organs of plants above and below the ground, such as shoot, leaf, flower and root, examples which may be mentioned being leaves, needles, stalks, stems, flowers, fruit bodies, fruits, seeds, roots, tubers and rhizomes. The plant parts also include harvested material and vegetative and generative propagation material (e.g., cuttings, tubers, rhizomes, off-shoots and seeds, etc.).

In one particular embodiment, the agricultural target is plant seed.

In another particular embodiment, the agricultural target is plant foliage.

As used herein, the term "foliage" is intended to mean all parts and organs of plants above the ground. Non-limiting examples include leaves, needles, stalks, stems, flowers, fruit bodies, fruits, etc. As used herein, the term "foliar application", "foliarly applied", and variations thereof, is intended to include application of a formulation to the foliage or above ground portions of the plant, (e.g., the leaves of the plant).

In another exemplary embodiment, the agricultural target is soil.

Agricultural growth medium, or other agricultural substrates, are also considered as possible agricultural targets in the sense of the present invention.

The term "agricultural target" does not cover microbial culture media used in microbiology.

In any case, according to the invention, the agricultural target of the invention is thus different from a culture media used in microbiology.

According to anyone of the invention embodiments, the target agricultural may cover various crops and plant.

Typical crops and plant include for instance:

- tropical crops such as cocoa, coffee, papaya, mango, pineapple, avocado, melons, watermelons, and banana;
- vegetable crops such as squash, onion, celery, lettuce, spinach, pumpkin, tomato, eggplant, peppers, broccoli, cabbage, cucumber, and the like;
- root crops such as potato, beet, carrot, turnip, ginger, and sweet potato;
- legume crops such as beans, soybeans, and peanuts;
- cereal grains such as com, oat, wheat, sorghum, alfalfa, barley, and rice;
- tree nut crops such as almond, cashew, macadamia, walnut, pecan, and pistachio;
- tree fruits such as apples, pears, peaches, plums, cherries, lemons, oranges, grapefruits, pomelos, and limes;
- berry crops such as strawberries, raspberries, blueberries, cranberries, blackberries, and elderberries;
- grapevines, for example for production of table grapes, juice, or wine; and/or
- turf grasses, lawns, golf courses, and ornamental plants.

According to the invention, mention may be made especially to grapevines.

## RAINFASTNESS

The present invention provides the use of guar gum for improved rainfastness of beneficial microorganisms on agricultural targets.

According to the present invention, the term "rainfastness" (or "waterfastness") refers to the ability of a substance to withstand being washed off by precipitation, condensation, guttation or irrigation.

According to the invention, the term "precipitation" refers to rainfall, and includes especially moderate rain (20-mm) as well as heavier rain (40-mm). In one embodiment, heavy morning dew may also be considered as falling under the term "precipitation".

As used herein, the term "increased rainfastness", "enhanced rainfastness" or "improved rainfastness" are equivalent and all refer to an increase in rainfastness.

Any standard methods known in the art, including but not limited to those disclosed in the Examples, can be used to measure rainfastness.

The guar gum of the invention may be used as a rainfastness agent for a beneficial microorganism, that is to say an ingredient which is capable to enhance the rainfastness of said beneficial microorganism, preferably when applied together with said beneficial microorganism.

Rainfastness may be assessed by comparing the biological efficacy of a beneficial microorganism after exposure to water (for instance simulated rainfall) vs biological efficacy of said beneficial microorganism without exposure to water (for instance simulated rainfall) (control) for a defined treatment with a given beneficial microorganism.

Rainfastness performance enhancement brought by an adjuvant like guar gum (also referred to as "increase in bioefficacy" according to the invention) may be assessed by comparing the bioefficacy gain of a defined treatment with a given beneficial microorganism containing the adjuvant vs treatment with said beneficial microorganism without adjuvant, under a defined exposure to water, such as for example simulated rainfall.

Biological efficacy performance enhancement "as is" (without exposure to water, such as rain) brought by an adjuvant like guar gum may be assessed by comparing the efficacy gain of a defined treatment with a given beneficial microorganism containing the adjuvant vs treatment with said beneficial microorganism without adjuvant, not subjected to exposure to water, such as for instance simulated rain.

Depending on the mode of action of the beneficial microorganism, different methods can easily be implemented to determine the bioefficacy of said beneficial microorganism on any agricultural target.

In some embodiments, rainfastness may be measured by the amount of a beneficial microorganism (and/or metabolites thereof, such as for instance the crystal aggregates of proteins that are produced during the sporulation of Bacillus thuringiensis), originally applied onto an agricultural target that is still left on the agricultural target after one or more episodes of precipitation, condensation, guttation or irrigation.

Rainfastness performance enhancement brought by an adjuvant like guar gum may be assessed by comparing the amount of a beneficial microorganism (and/or metabolites thereof, such as for instance the crystal aggregates of proteins that are produced during the sporulation of Bacillus thuringiensis) that is still left on the agricultural target, with and without the rainfastness agent of the invention, after one or more episodes of precipitation, condensation, guttation or irrigation.

The present invention mainly provides the use of guar gum for improved rainfastness of beneficial microorganisms on agricultural targets.

In one exemplary embodiment, the guar gum of the invention may also protect the beneficial microorganisms from other adverse conditions such as friction, wind, and secondary agricultural treatments (e.g., subsequent sprayings or subsequent applications or utilizations of agricultural treatments) that might dilute or remove the beneficial microorganism from the agricultural target.

The present invention provides the use of guar gum for retaining beneficial microorganisms on agricultural targets, especially when said agricultural target is subject to adverse conditions as defined previously.

## COMPOSITION

In one embodiment, the present invention relates to an agricultural composition comprising at least one beneficial microorganism and at least one guar gum, as defined previously.

The beneficial microorganism is present in an agricultural composition of the invention in an effective amount.

As used herein, the term "effective amount" is defined as the amount of the beneficial microorganism sufficient to provide the beneficial effect to the plant.

For instance, when the beneficial microorganism is a biopesticide, the term "effective amount" may be defined as the amount of the biopesticide sufficient to cause infection in the pest which will then lead to the controlling of pests. The actual effective amount in absolute value may depend on various factors including, but not limited to, the mortality rate of the pest or pests relative to the rate at which the biopesticide is applied, synergistic or antagonistic interactions between the other active or inert ingredients which may increase or reduce the activity of the biopesticide, the inherent susceptibility of the life stage and species of pest, and the stability of the biopesticide in compositions.

The "effective amount" of the beneficial microorganism, for instance the biopesticide, of the invention may be determined, e.g., by a routine dose response experiment.

The guar gum is present in an agricultural composition of the invention in an amount sufficient to improve rainfastness of beneficial microorganisms on agricultural targets.

According to the present invention, the beneficial microorganism and the guar gum of the invention are applied together.

The term "to apply together" includes simultaneous and successive application.

In one embodiment, the beneficial microorganism and the guar gum may be applied as a single formulation.

In another embodiment, the beneficial microorganism and the guar gum may be applied via separate application means. In this case, the beneficial microorganism and the guar gum can be applied simultaneously or in succession.

The amount of guar gum may vary to a large extent, depending especially on the agricultural composition in which it is incorporated and possible dilution rates prior to application on the agricultural target.

For example, in one embodiment, the guar gum of the invention may be used in an amount ranging from 0.03 to 3 pbw, for instance from 0.05 to 1 pbw, relative to the total weight of the beneficial microorganism-containing spray treatment or slurry formulation intended to be applied on the agricultural target.

The methods and the compositions of the present invention can be applied in conventional manner by using techniques as skilled person is familiar with.

The method and the compositions according to the present invention can be applied before, during or after emergence of the crop plants.

In the case of a post-emergence treatment of the plants, the method and the compositions according to the invention are preferably applied by foliar application.

The method and the compositions according to the present invention are applied preferably prior to the water exposure, especially the onset of rain, preferably up to six hours before water exposure, more preferably up to four hours before water exposure, particularly preferably up to two hours before water exposure, more particularly preferably up to one hour before water exposure, most preferably up to 30 min before water exposure.

The method and the compositions according to the present invention are suitable for application in a wide variety of crop plants.

An agricultural composition of the invention may further include other pesticides, growth regulators, micronutrients, and/or fertilizers commonly used in the art.

An agricultural composition of the invention may further include, if desired, one or more surfactants and, if desired, one or more further auxiliaries customary for crop protection compositions.

According to anyone of the invention embodiments, the rainfastness agent of the invention may be used as an additive (tank mix). In one embodiment, the rainfastness agent may be mixed with the phytosanitary formulation before the latter is applied to the agricultural target.

According to anyone of the invention embodiment, the rainfastness agent of the invention may be used as a constituent of the phytosanitary formulation (built-in).

According to anyone of the invention embodiments, the formulation comprising at least one guar gum may be intended to be a spray applied composition.

In such embodiments, the spray applied composition comprising at least one guar gum may be such that it exhibits decreasing tendency to drift with decreasing relative amount, typically expressed as a volume percentage of total spray applied droplet volume, of small size spray droplets, that is, spray droplets having a droplet size below a given value, typically, a droplet size of less than 150 micrometers ("$\mu$m").

This may be advantageous especially to reduce drift, namely off-target movement of droplets of the beneficial microorganism composition that is applied to the agricultural target.

In one exemplary embodiment, the guar gum of the invention when present in a spray medium under certain conditions, can reduce the fine spray droplets below 150 $\mu$m effectively.

In one aspect of the invention, the volume of fine droplets (namely of spray droplets below 150$\mu$m) may be reduced by at least 30% during the spraying of the composition, for instance by at least 40%, for instance by at least 50%.

The present invention thus relates to the use of a guar gum of the invention as a good rainfastness agent as well as a good drift control agent.

In some embodiment, in addition to provide improved rainfastness benefits, the use of a specific guar gum and/or of a specific formulation containing a guar gum of the invention may advantageously permit to achieve a good compromise between drift reduction and volume mean diameter (VMD) of droplets of the aqueous spray composition containing it, even under the influence of shear forces such as under mechanical stress in the spraying device.

In particular, the VMD may advantageously increase only moderately and in any case not exceed 600 $\mu$m.

The following examples are provided for illustrative purposes and are not intended to limit the scope of the invention as claimed herein. Any variations in the exemplified examples which occur to the skilled artisan are intended to fall within the scope of the present invention.

**EXAMPLE:** Biotransfer rainfastness test on Amylo-X® (Improved Biopesticide Formulation Properties: Rainfastness & Bio-Efficacy)

Ingredients used

- Tap water,
- calibrated suspension of **B.** cinerea strain at 1.0*10^5 spores/ml
- microbial biocontrol agent: Amylo-X® WG, marketed by Certis Europe BV, a fungicide based on a strain of Bacillus amyloliquefaciens subsp. plantarum D747, 5.10^10 CFU/g (250gr/kg)
- adjuvant 1: guar gum available from Solvay
- adjuvant 2 (comparative): Sticman®, marketed by De Sangosse, a synthetic latex at 460,35 g/L

Preparation of Samples

30ml of tap water are placed in a 50ml Falcon tube and the water is put under strong agitation with a magnetic stirring rod. 0.021gr of adjuvant 1 (to reach 0.07 wt.%) or 0.03gr of adjuvant 2 (Sticman®, to reach 0.1 wt.%) are added to water in the 50ml Falcon tube. The agitation is maintained for few minutes to ensure good dispersion of powder. After that, 0.25g of Amylo-X® WG was added in each of the 3 tubes, followed by magnetic stirring during a few minutes until homogenization.

The following compositions were thus prepared (amounts in weight % vs water content).

| Series | Biopesticide Formulation | Dosage/Concentration |
|---|---|---|
| Serie 0 | Amylo-X® (Bacillus amyloliquefaciens ssp. plantarum strain D747, 5.1010 CFU/g) | 0.83 wt% vs water content |
| Serie 1 | Amylo-X® (Bacillus amyloliquefaciens ssp. plantarum strain D747, 5.1010 CFU/g) adjuvant 1 | 0.83 wt% vs water content  0.07 wt.% vs water content |
| Serie 2 | Amylo-X® (Bacillus amyloliquefaciens ssp. plantarum strain D747, 5.1010 CFU/g) adjuvant 2 | 0.83 wt% vs water content  0.1 wt.% vs water content |

Rainfastness & Bio-efficacy Test

1. Grapevine leaves (Chardonnay) are sprayed with water (untreated control), Serie 0 formulation, Serie 1 formulation or Serie 2 formulation. Three grapevine leaves are used for each condition tested in the description below.

2. After treatment, grapevine leaves are left to dry at room temperature for 30min under laminar flow and then placed in a climatic chamber for 4 hours incubation.

3. In certain cases, an artificial rain (generated via a rain automatic device) of 20-mm amount (40mm/h rate during 30min) or 40-mm amount (40mm/h rate during 1h), was applied onto above prepared grapevine leaves, followed by drying during 1h under laminar flow. The leaves samples were then incubated during 24h in the climatic chamber.

4. Grapevine leaves were transferred in a Petri dish containing adapted water agar. The lower (abaxial) face of vine leaf was inoculated with a calibrated suspension of B. cinerea strain at $1.0*10^5$ spores/ml. Two inoculation spots are performed per leaf leading to a total of 6 inoculation events per condition.

5. After inoculation, Petri dishes were placed in the climatic chamber (conditions: temperature of 23°C day/19°C night - and controlled Relative Humidity of 100%).

6. Four (4) and Six (6) days after the inoculation, each vineleaf was observed and the diameter of the lesion circle caused by B. cinerea was measured.

7. The disease intensity was calculated in percent of the total length of the leaf analyzed.

8. The Area Under the Disease Progress Curve (AUDPC) was a quantitative measure of disease intensity over time. The most commonly used method for estimating the AUDPC, the trapezoidal method, is performed by multiplying the average disease intensity between each pair of adjacent time points by the time interval corresponding and this for each interval time. The AUDPC is determined with the following formula by adding all of the trapezoids:

$$A_k = \sum_{i=1}^{N_i-1} \frac{(y_i + y_{i+1})}{2}(t_{i+1} - t_i)$$

yi = Disease intensity at the ith observation
ti = time (days) at the ith observation
N = total number of observations

9. The fungicide efficacies are determined from the AUDPC values and expressed in percent of the untreated control : % efficacyserieX = [AUDPCuntreated control - AUDPCserieX tested in same condition as untreated control] /AUDPCuntreated control

10. Rainfastness for each formulation series was evaluated as the ratio of the % efficacy of the considered series under either 20mm or 40mm water exposure versus the % efficacy of the considered series without water exposure.

11. Biological efficacy enhancement (BEE) brought by tested adjuvant is evaluated as the gain of efficacy brought by the presence of adjuvant in the biofungicide treatment, without exposure to flowing water, that is to say for example for BEEadjuvant1 = % efficacyserie1 - % efficacyserie0

12. Rainfastness enhancement (RE) under 20mm or 40mm water exposure brought by tested adjuvant is evaluated from the gain of efficacy achieved by the presence of the adjuvant in the biofungicide treatment, subjected either to 20mm or 40mm rainfall simulation that is to say for example for formulation serie1, containing adjuvant 1 under 20mm rainfall exposure: REadjuvant1_20mm = % efficacyserie1_20mm - % efficacyserie0_20mm

Results

**TABLE 1**: Rainfastness and bioefficacy data/results of Amylo-X® formulation (0.83% w/v) alone (serie 0), with adjuvant 1 (serie 1) or with adjuvant 2 (serie 2), under different raining condition (NRW - no rain; RW20 - 20mm rain; RW40 - 40mm rain) against B. cinerea development on grapevine leaves.

| Modalités | | **AUDPC** | % efficacy | Rainfast ness ratio | Biological efficacy enhancement (BEE) | Rainfastness enhancement (RE) |
|---|---|---|---|---|---|---|
| | | average | | | | |
| **no treatment** | NRW | **194,4** | | | | |
| | RW20 | 286,1 | | | | |
| | RW40 | 250,9 | | | | |

(continued)

| Modalités | | | AUDPC | % efficacy | Rainfast ness ratio | Biological efficacy enhancement (BEE) | Rainfastness enhancement (RE) |
|---|---|---|---|---|---|---|---|
| | | | average | | | | |
| Amylo-X® | control (serie 0) | NRW | **171,3** | **11,9** | **-** | | |
| | | RW20 | 219,9 | **23,1** | **1,94** | | |
| | | RW40 | 250,9 | **0,0** | **0,00** | | |
| | serie 1 | NRW | **151,4** | **22,1** | | **10,24** | |
| | | RW20 | 137,5 | **51,9** | **2,35** | | **28,80** |
| | | RW40 | 147,9 | **41,1** | **1,85** | | **41,04** |
| | serie 2 | NRW | **169,0** | **13,1** | - | **1,19** | - |
| | | RW20 | 149,5 | **47,7** | **3,65** | | **24,60** |
| | | RW40 | 165,3 | **34,1** | **2,61** | | **34,12** |

By comparing the classical Rainfastness ratios calculated as described above, it can be observed that under both rain washing conditions, the Rainfastness ratio is higher in presence of adjuvants.

This is particularly obvious in the case of higher amount of rain (40mm), where the bioefficacy in absence of adjuvants reduced to zero. While by comparing the Rainfastness ratios between the two adjuvants, one could easily notice a slight higher value in the case of adjuvant 2.

However, as can be discerned that adjuvant 1 brought already a much higher Biological efficacy enhancement (BEE) without application of rain, i.e. 10.24 versus 1.19 (BEE of adjuvant 2), another descriptor, Rainfastness enhancement (RE) was introduced to better evaluate and appreciate the real benefit brought by an adjuvant in case of rain, i.e. the additional bioefficacy introduced by the presence of the adjuvant.

Indeed, under each rain washing condition, the RE of adjuvant 1 is higher than that of the adjuvant 2, indicating a more important improvement in bioefficacy of the microbial fungicide Bacillus amyloliquefaciens ssp. plantarum. strain D747, thus a better rainfastness.

Compared with the control (without adjuvant addition) and adjuvant 2, adjuvant 1 not only showed a boosting effect in absence of rain (10% higher), but also reveals a more important "synergetic boosting" effect in presence of moderate amount of rain (20-mm). This effect is considered to be related to the moisture-facilitated growth of Bacillus amyloliquefaciens. Furthermore, under more important rain (40-mm) washing conditions, such "synergetic-boosting" effect disappeared in the control sample, while was exceptionally well retained in presence of adjuvants, especially in the case of adjuvant 1.

## Claims

1. A method for improving rainfastness of at least one beneficial microorganism on an agricultural target comprising the step of combining said beneficial microorganism with at least one guar gum on said agricultural target.

2. A method for improving rainfastness of at least one beneficial microorganism on an agricultural target, with said method comprising the step of applying together at least said beneficial microorganism and at least one guar gum, to said agricultural target.

3. A method for improving rainfastness of at least one beneficial microorganism-containing solution sprayed on an agricultural target, with said method comprising at least the following steps:

   - providing a guar gum,
   - combining said guar gum with at least one beneficial microorganism to obtain the solution and
   - spraying the resulting solution on the agricultural target.

4. A method for improving rainfastness of at least one beneficial microorganism-containing solution sprayed on an agricultural target, with said method comprising at least the following steps:

- spraying a solution containing a guar gum of the invention on the agricultural target, and simultaneously or successively,
- spraying a solution containing one beneficial microorganism on the agricultural target.

5. A method of treating a plant infection by applying together at least one beneficial microorganism, especially one biopesticide, and at least one guar gum to an agricultural target in need thereof.

6. A method to increase bioefficacy of a beneficial microorganism comprising the step of (i) combining said beneficial microorganism with at least an effective amount of one guar gum and subsequently (ii) submitting said beneficial microorganism to exposure to water.

7. A method to increase bioefficacy of a beneficial microorganism comprising the step of (i) applying together said beneficial microorganism with at least an effective amount of one guar gum and subsequently (ii) submitting said beneficial microorganism to exposure to water.

8. The method according to anyone of the preceding claims, wherein said guar gum is crosslinked.

9. The method according to anyone of the preceding claims, wherein said guar gum has an average molecular weight of between about 100,000 Daltons and 2,000,000 Daltons, for instance between about 300,000 Daltons and 1,800,000 Daltons, for instance between about 350,000 Daltons and 1,700,000 Daltons, for instance between about 400,000 Daltons and 1,500,000 Daltons.

10. An agricultural composition comprising at least one guar gum and at least one beneficial microorganism, with said guar gum being present in a sufficient amount to improve rainfastness of said beneficial microorganism on an agricultural target.

11. The composition according to claim 10, wherein said guar gum is crosslinked.

12. The composition according to claim 10 or 11, wherein said guar gum has an average molecular weight of between about 100,000 Daltons and 2,000,000 Daltons, for instance between about 300,000 Daltons and 1,800,000 Daltons, for instance between about 350,000 Daltons and 1,700,000 Daltons, for instance between about 400,000 Daltons and 1,500,000 Daltons.

FIGURE 1

Legend: ■ No rain    ■ 20-mm rain    ■ 40-mm rain

AMYLO-X® (CONTROL): 12%, 23%, 0%

AMYLO-X® + ADJUVANT 1: 22%, 52%, 41%

AMYLO-X® + ADJUVANT 2: 13%, 48%, 34%

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/142366 A1 (LOCUS AGRICULTURE IP COMPANY LLC [US]) 9 July 2020 (2020-07-09) * page 2, line 32 - line 36 * * page 3, line 18 - line 22 * * page 9, line 18 - line 22 * * claims 8,10 * | 1,2,5,10 | INV. A01N25/10 A01N43/16 A01N63/00 C12N1/00 A01N65/20 |
| X | PREININGER CLAUDIA ET AL: "Concepts and applications of foliar spray for microbial inoculants", APPLIED MICROBIOLOGY AND BIOTECHNOLOGY, SPRINGER BERLIN HEIDELBERG, BERLIN/HEIDELBERG, vol. 102, no. 17, 30 June 2018 (2018-06-30), pages 7265-7282, XP036564997, ISSN: 0175-7598, DOI: 10.1007/S00253-018-9173-4 [retrieved on 2018-06-30] * abstract * * page 7266, left-hand column, paragraph 2 * * page 7274, right-hand column, last paragraph * * page 7275, right-hand column, last paragraph * * page 7276; table 3 * | 1,2,10 | |
| Y | US 2019/090477 A1 (LIU HONG [US] ET AL) 28 March 2019 (2019-03-28) * paragraphs [0003], [0011] - [0013], [0054], [0118], [0152] * * claims 1,7,9 * | 4 | TECHNICAL FIELDS SEARCHED (IPC) A01N C12R C12N |

-/--

The present search report has been drawn up for all claims

| Place of search | Date of completion of the search | Examiner |
|---|---|---|
| Munich | 28 January 2021 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/109559 A1 (RHODIA OPERATIONS [FR]) 4 June 2020 (2020-06-04) | 3,5-12 | |
| Y | * page 2, line 26 - page 3, line 4 *<br>* page 5, line 27 - line 35 *<br>* page 7, line 16 - line 22 *<br>* page 17, line 32 - line 36 *<br>* example 1b *<br>----- | 4 | |
| A | Ingrid Potyka: "Emulsion-formulation of microbial herbicides",<br>,<br>1 May 1995 (1995-05-01), XP55769588,<br>Retrieved from the Internet:<br>URL:https://research-information.bris.ac.uk/files/34490122/296703.pdf<br>[retrieved on 2021-01-27]<br>* the whole document *<br>----- | 1-12 | |

TECHNICAL FIELDS
SEARCHED (IPC)

The present search report has been drawn up for all claims

| Place of search | Date of completion of the search | Examiner |
|---|---|---|
| Munich | 28 January 2021 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 0391

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2021

| Patent document cited in search report | | Publication date | Patent family member(s) | | Publication date |
|---|---|---|---|---|---|
| WO 2020142366 | A1 | 09-07-2020 | NONE | | |
| US 2019090477 | A1 | 28-03-2019 | AR | 113175 A1 | 05-02-2020 |
| | | | AU | 2018335754 A1 | 12-03-2020 |
| | | | BR 112020005432 A2 | | 24-09-2020 |
| | | | CA | 3074903 A1 | 28-03-2019 |
| | | | US | 2019090477 A1 | 28-03-2019 |
| | | | WO | 2019060664 A2 | 28-03-2019 |
| WO 2020109559 | A1 | 04-06-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6168947 B
- US 5019389 A

**Non-patent literature cited in the description**

- *Nematology Advances and Perspectives,* 2004, vol. 2
- *Todar's Online Textbook of Bacteriology,* 2009